## Europäisches Patentamt

## European Patent Office

## Office européen des brevets

(11) Veröffentlichungsnummer: **0 510 336 B1**

## EUROPÄISCHE PATENTSCHRIFT

(45) Veröffentlichungstag der Patentschrift: **12.07.95**

(51) Int. Cl.⁶: **G01B 7/30**, G01P 13/02

(21) Anmeldenummer: **92103855.0**

(22) Anmeldetag: **06.03.92**

(54) **Verfahren zur berührungslosen Kontrolle der Drehrichtung elektrischer Maschinen.**

(30) Priorität: **23.04.91 DE 4113201**

(43) Veröffentlichungstag der Anmeldung:
**28.10.92 Patentblatt 92/44**

(45) Bekanntmachung des Hinweises auf die
Patenterteilung:
**12.07.95 Patentblatt 95/28**

(84) Benannte Vertragsstaaten:
**AT BE CH DE DK ES FR GB GR IT LI NL PT SE**

(56) Entgegenhaltungen:
EP-A- 0 076 861  EP-A- 0 443 940
DE-A- 2 657 154  DE-A- 2 915 461
DE-A- 3 326 477  DE-A- 3 938 057
US-A- 4 710 683  US-A- 4 758 769

(73) Patentinhaber: **WILO GmbH**
**Nortkirchenstrasse 100**
**D-44263 Dortmund (DE)**

(72) Erfinder: **Greitzke, Stephan F., Dr.-Ing.**
**Pottenkamp 22**
**W-4600 Dortmund 30 (DE)**

(74) Vertreter: **COHAUSZ HASE DAWIDOWICZ &**
**PARTNER**
**Patentanwälte**
**Schumannstrasse 97-99**
**D-40237 Düsseldorf (DE)**

EP 0 510 336 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft ein Verfahren und eine Vorrichtung zur berührungslosen Kontrolle der Drehrichtung des Rotors einer elektrischen Maschine, die von einem Maschinengehäuse umgeben ist.

Bei nicht zugängigen oder vollkommen gekapselten Maschinen, wie z. B. einer Spaltrohrpumpe, ist sowohl die Drehrichtung als auch der ein- bzw. ausgeschaltete Zustand nicht sofort erkennbar. Für die Kontrolle und bei der Inbetriebnahme solcher Maschinen ist es erforderlich, die Maschinen-Drehrichtung zu kennen.

Um die Drehrichtung festzustellen, müssen bisher Schrauben oder Abdeckungen des Maschinengehäuses geöffnet werden und der Lauf der Maschine visuell festgestellt werden. Neben dem zusätzlichen Montageaufwand bei der Wartung von solchen elektrischen Maschinen hat diese Kontrollmethode bei Elektromotoren, insbesondere Spaltrohrmotoren von Pumpen, die Flüssigkeiten fördern, den Nachteil, daß das Fluid nach dem Öffnen des Motorgehäuses austritt.

Aus dem Dokument DE-A-2915461 ist es bekannt, einen einzelnen Permanentmagneten mit der Welle eines Motors drehfest zu verbinden, im Bereich des von dem rotierenden Permanentmagneten erzeugten Magnetfeldes mindestens zwei um einen Winkelbetrag versetzte Magnetfelddetektoren anzuordnen, und aus deren Ausgangssignalen die Drehrichtung zu bestimmen.

Aufgabe der Erfindung ist es, ein Verfahren vorzuschlagen, das bei einfacher Konstruktion und Handhabung eine schnelle und sichere Erfassung der Motordrehrichtung und des Motorlaufes ermöglicht. Gleichzeitig soll eine Vorrichtung zur Durchführung dieses Verfahrens angegeben werden.

Diese Aufgabe wird bei einem Verfahren der eingangs genannten Art erfindunsgemäß dadurch gelöst, daß der Verlauf des durch die Maschine erzeugten magnetischen Streufelds durch an der Außenseite des Maschinengehäuses im Bereich der elektromagnetischen und/oder magnetischen kopplungseinrichtung zwischen Ständer und Rotor, bezogen auf die Maschinenachse radial um einen Winkelbetrag versetzt angeordnete Sensoren erfaßt wird, deren phasenverschobene, einander gleiche Meßsignale einer Auswertschaltung zugeführt werden, die als Anzeige für die Drehrichtung der Maschine ein dem Vorzeichen der Phasenverschiebung entsprechendes Ausgangssignal abgibt.

Durch die Verwendung eines elektronischen Meßverfahrens ist es nicht mehr erforderlich, das Gehäuse der elektrischen Maschine zur Feststellung der Drehrichtung zu öffnen. Die Sensoren können auf der Außenseite des Maschinengehäuses befestigt werden. So kann eine schnelle unkomplizierte Messung der Drehrichtung ausgeführt werden.

Das erfindungsgemäße Verfahren ist sowohl für den mobilen Einsatz im Wartungsdienst als auch bei einer stationären Vorrichtung für die Kontrolle der Drehzahl und Drehrichtung einer elektrischen Maschine geeignet. Dabei läßt sich eine sichere Aussage über die Drehrichtung schon dann treffen, wenn der Verlauf des durch die Maschine erzeugten Magnetfelds durch zwei Sensoren erfaßt wird.

Vorrichtungsgemäß wird die Aufgabe dadurch gelöst, daß die Sensoren zum Erfassen des Verlaufes des durch die Maschine erzeugten magnetischen Streufeldes elektromagnetisch empfindliche Sensoren, insbesondere Hallsensoren sind, die um einen Winkelbetrag versetzt an dem Maschinengehäuse an dessen Außenseite im Bereich der elektromagnetischen und/oder magnetischen Kopplungseinrichtung zwischen Ständer und Rotor befestigbar sind und mit einer Auswertschaltung verbunden sind, die als Anzeige für die Drehrichtung der Maschine ein dem Vorzeichen der Phasenverschiebung der Signale der Sensoren entsprechendes Ausgangssignal abgibt.

Dabei läßt sich die Drehrichtung der Maschine besonders leicht dann feststellen, wenn die Auswertschaltung jeweils ein Anzeigeinstrument für die positive und ein Anzeigeelement für die negative Drehrichtung der Maschine aufweist. Besonders vorteilhaft ist es, wenn die Anzeigeinstrumente Leuchten, insbesondere Leuchtdioden sind.

Die Signale der elektromagnetisch empfindlichen Sensoren können vorteilhaft durch eine Auswertschaltung ausgewertet werden, die Vorverstärker zum Verstärken der Sensorsignale, Bandpässe zum Ausfiltern ungewünschter Störfrequenzen, Analog-Digital-Wandlerschaltungen, insbesondere Schmitt-Trigger, zum Wandeln der analogen in digitale Signale und Komperatoren zum Bestimmten des Vorzeichens der Phasenverschiebung aufweist. Eine solche Auswertschaltung kann darüber hinaus microprozessorgesteuert sein.

Mittels der Bandpässe ist es möglich, ungewünschte Störfrequenzen auszufiltern und nur die Grundfrequenz, z.B. 50 Hz, des Motorstreufeldes zu erfassen. Der Einsatz von Bandpässen ist besonders für Umrichter- oder Phasenanschnitt-gesteuerte Maschinen mit hohem Oberwellenanteil im Maschinenstrom von Vorteil.

Die erfindungsgemäße Vorrichtung kann Teil einer stationären Vorrichtung zum Überwachen aller Betriebsparameter einer Maschine, insbesondere eines Elektromotors für eine Pumpe oder einen Lüfter sein. Genauso ist es möglich, die Vorrichtung für den Wartungs- und Servicedienst tragbar zu gestalten. In diesem Fall ist es sinnvoll, wenn die Vorrichtung durch einen Akkumulator gespeist ist.

Die Meßdaten lassen sich besonders leicht an eine Regeleinrichtung weiterleiten, wenn die Vorrichtung eine digitale Schnittstelle zum Anschließen eines Regelgerätes aufweist.

Im folgenden soll die Erfindung anhand von ein Ausführungsbeispiel zeigenden Zeichnungen erläutert werden.

Es zeigen:

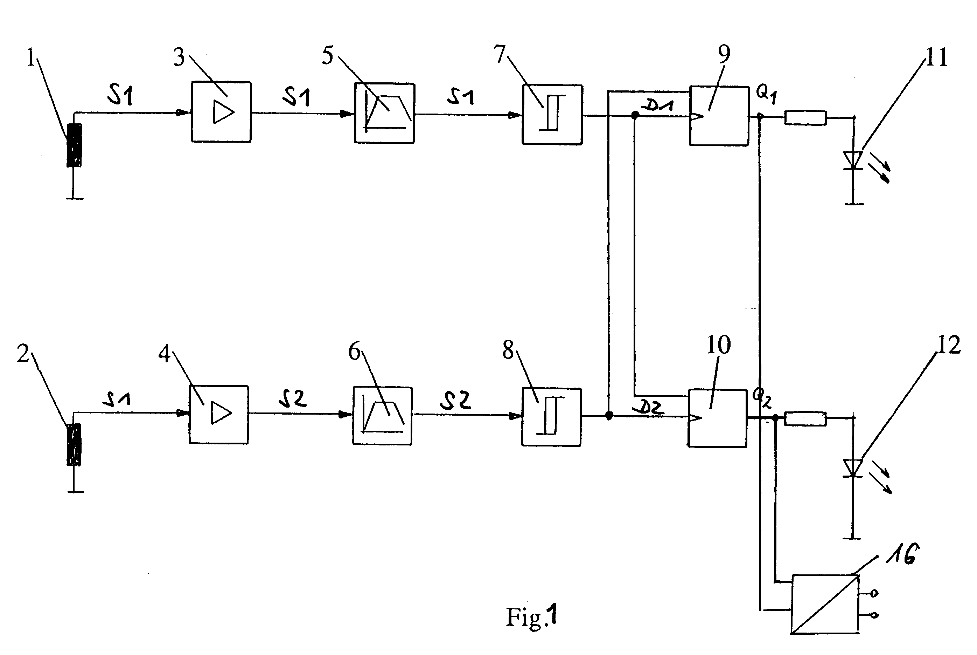

Fig.1 ein Blockschaltbild einer Vorrichtung zum Erfassen der Drehrichtung eines Motors in Übereinstimmung mit einem Ausführungsbeispiel der Erfindung

Fig.2 die Anordnung der Sensoren im elektromagnetischen Streufeld des Motors;

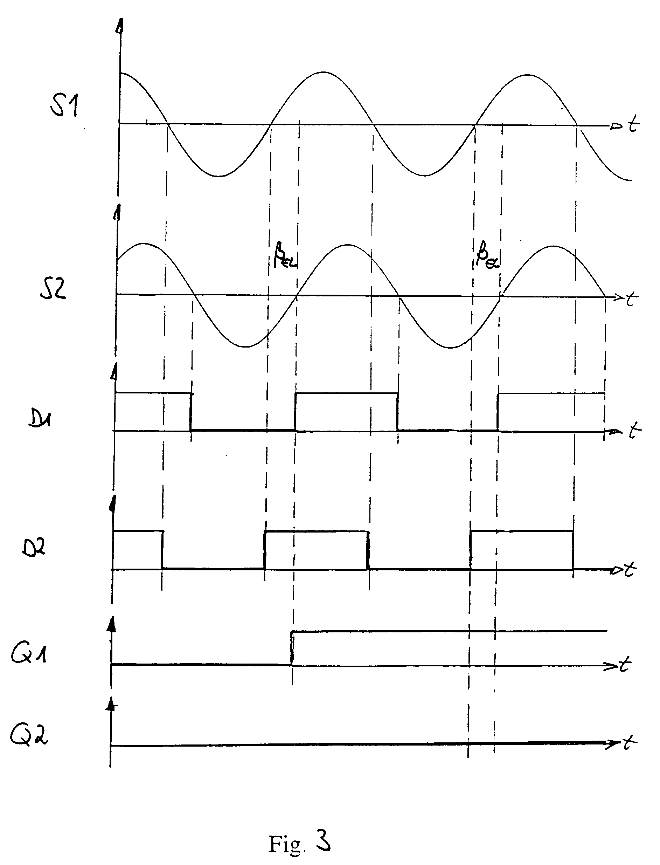

Fig.3 die zeitlichen Verläufe der durch die Sensoren erfaßten und die Auswählelektronik umgewandelten Signale.

Die Vorrichtung zum Erfassen der Drehrichtung eines Motors weist Sensoren 1,2, z.B. Spulen oder Hallelemente, Operationsverstärker 3,4, Bandpässe 5,6, Schmitt-Trigger-Schaltungen 7,8, Phasenkomperatoren 9,10, Leuchtdioden 11,12 und eine digitale Schnittstelle 16 auf. Die Sensoren 1,2 sind radial zueinander um einen Winkelbetrag $\beta_m$ auf einer normal zu der Motorachse (M) angeordneten Ebene, beispielsweise auf der der Durchführung der Motorwelle gegenüberliegenden Stirnseite 13 oder der den Motor umhüllenden Mantelfläche 14 des Motorgehäuses 15, versetzt befestigt.

Das elektromagnetische Streufeld Bm des Motors wird in die Sensoren 1,2 induziert, die ein entsprechendes Signal S1,S2 liefern, das einen cosinusförmigen Verlauf hat. Dabei sind die Signale S1, S2 um einen Winkel $\beta_{eL}$ phasenverschoben. Die Signale S1,S2 werden durch die Operationsverstärkrr 3,4 vorverstärkt. Durch die Bandpässe 5,6 wird nur die 50 Hz-Grundfrequenz des Motorfeldes durchgelassen.

Die Schmitt-Trigger-Schaltungen 7,8 formen die analogen Spannungen anschließend in Digitalsignale um. Als Phasenkomperator 9,10 wird ein flankengetriggertes D-Flip-Flop verwendet, das in Abhängigkeit von der Phasenverschiebung $\beta_{eL}$ Ausgangssignale $Q_1,Q_2$ abgibt. Ist der Wert der Phasenverschiebung $\beta_{eL}$ positiv, wie es bei Rechtslauf des Motors der Fall ist, liegt das Ausgangssignal $Q_1$ auf einem hohen Pegel und die Leuchtdiode 11 leuchtet. Ist dagegen die Phasenverschiebung $\beta_m$ negativ, so ist das Ausgangssignal $Q_2$ hochpegelig und die Leuchtdiode 12 leuchtet. Die auf diese Weise erzeugten Meßdaten liegen gleichzeitig an der digitalen Schnittstelle 16 an, an die ein Regelgerät anschließbar ist.

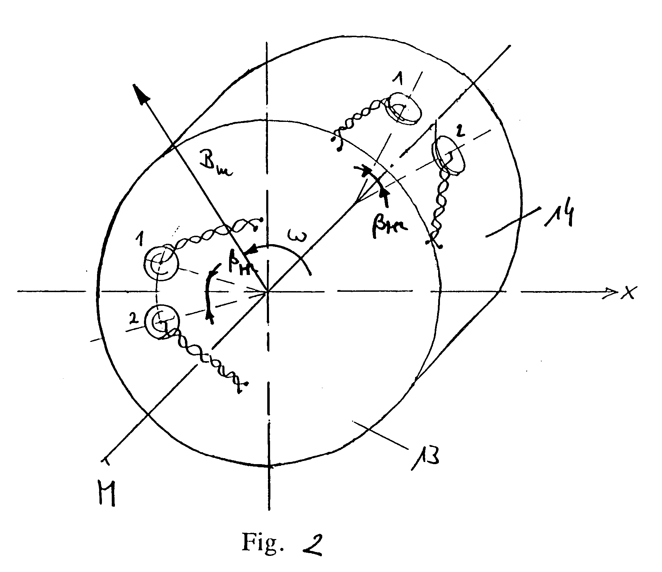

Das Verfahren wird durch die nachfolgend beschriebenen physikalischen Gleichungen bestimmt. Das magnetische Feld B des Motors, wie in Fig.2 in Raumzeigerdarstellung gezeigt, rotiert gemäß Gleichung (G1) mit der Winkelgeschwindigkeit um die Achse (M):

(G1) $\qquad \omega = \frac{2\pi}{2p} fN$

Es bedeuten:

fN = Netzfrequenz

2p = Polpaarzahl des Motors

Die Phasenverschiebung $\beta_{eL}$ ergibt sich nach Gleichung (G2):

(G2) $\beta_{eL} = \frac{\beta_m}{2p}$ ; $\qquad \beta_m = 15° \text{ bis } 30°$

## Patentansprüche

1. Verfahren zur berührungslosen Kontrolle der Drehrichtung des Rotors einer elektrischen Maschine, die von einem Maschinengehäuse umgeben ist, **dadurch gekennzeichnet,** daß der Verlauf des durch die Maschine erzeugten magnetischen Streufelds durch an der Außenseite des Maschinengehäuses im Bereich der elektromagnetischen und/oder magnetischen Kopplungseinrichtung zwischen Ständer und Rotor, bezogen auf die Maschinenachse (M) radial um einen Winkelbetrag versetzt angeordnete Sensoren (1,2) erfaßt wird, deren phasenverschobene, einander gleiche Meßsignale (S1, S2) einer Auswertschaltung zugeführt werden, die als Anzeige für die Drehrichtung der Maschine ein dem Vorzeichen der Phasenverschiebung entsprechendes Ausgangssignal (Q1, Q2) abgibt.

2. Verfahren nach Anspruch 1, **dadurch gekennzeichnet,** daß der Verlauf des durch die Maschine erzeugten magnetischen Streufeldes durch zwei Sensoren (1,2) erfaßt wird.

3. Vorrichtung zur Durchführung des Verfahrens nach einem der Ansprüche 1 oder 2, **dadurch gekennzeichnet,** daß die Sensoren (1,2) zum Erfassen des Verlaufs des durch die Maschine erzeugten magnetischen Streufeldes elektromagnetisch empfindliche Sensoren (1,2), insbesondere Hallsensoren, sind, die um einen Winkelbetrag ($\beta_M$) an dem Maschinengehäuse, an dessen Außenseite im Bereich der elektromagnetischen und/oder magnetischen kopplungseinrichtung zwischen Ständer und Rotor befestigbar sind und mit einer Auswertschaltung verbunden sind, die als Anzeige für die Drehrichtung der Maschine ein dem Vorzeichen der Meßsignale (S1,S2) der Sensoren (1,2) entsprechendes Ausgangssignal ($Q_1,Q_2$) abgibt.

**4.** Vorrichtung nach Anspruch 3,
**dadurch gekennzeichnet,** daß die Auswertschaltung jeweils ein Anzeigeinstrument für die positive und ein Anzeigeelement für die negative Drehrichtung der Maschine aufweist.

**5.** Vorrichtung nach Anspruch 3 oder 4,
**dadurch gekennzeichnet,** daß die Anzeigeinstrumente Leuchten, insbesondere Leuchtdioden (11,12) sind.

**6.** Vorrichtung nach einem der Ansprüche 3 bis 5,
**dadurch gekennzeichnet,** daß die Auswertschaltung Vorverstärker (3,4) zum Verstärken der Sensorsignale, Bandpässe (5,6) zum Ausfiltern ungewünschter Störfrequenzen, Analog-Digital-Wandlerschaltungen (7,8), insbesondere Schmitt-Trigger, zum Wandeln der analogen in digitale Signale und Komparatoren (9,10) zum Bestimmen des Vorzeichens der Phasenverschiebung aufweist.

**7.** Vorrichtung nach einem der Ansprüche 3 bis 6,
**dadurch gekennzeichnet,** daß die Auswertschaltung microprozessorgesteuert ist.

**8.** Vorrichtung nach einem der Ansprüche 3 bis 7,
**dadurch gekennzeichnet,** daß die Vorrichtung Teil einer Vorrichtung zum Überwachen aller Betriebsparameter einer Maschine, insbesondere eines Elektromotors für eine Pumpe oder einen Lüfter ist.

**9.** Vorrichtung nach einem der Ansprüche 3 bis 8,
**dadurch gekennzeichnet,** daß die Vorrichtung tragbar ist und durch einen Akkumulator gespeist wird.

**10.** Vorrichtung nach einem der Ansprüche 3 bis 9,
**dadurch gekennzeichnet,** daß die Vorrichtung eine digitale Schnittstelle (16) zum Anschließen eines Regelgerätes aufweist.

**Claims**

**1.** A method for the contactless controlling of the sense of rotation of an electrical machine which is enclosed by a machine casing, characterized in that the course of the magnetic leakage field generated by the machine is detected by sensors (1, 2) which are disposed offset radially by an angular amount, referred to the machine axis (M), on the outside of the machine casing in the zone of the electromagnetic and/or magnetic coupling device between the stator and the rotor, and the identical dephased measuring signals (S1, S2) of the sensors are supplied to an evaluating circuit which delivers as the indication of the sense of direction of the machine an output signal ($Q_1$, $Q_2$) corresponding to the sign of the phase displacement.

**2.** A method according to claim 1, characterized in that the course of the magnetic leakage field generated by the machine is detected by two sensors (1, 2).

**3.** An apparatus for the performance of the method according to one of claims 1 or 2, characterized in that the sensors (1, 2) for detecting the course of the magnetic leakage field generated by the machine are electromagnetically sensitive sensors (1, 2), more particularly Hall sensors, which can be attached offset by an angular amount ($\beta_M$) to the outside of the machine casing in the zone of the electromagnetic and/or magnetic couplings device between the stator and the rotor and which are connected to an evaluating circuit which delivers as the indication of the sense of rotation of the machine an output signal ($Q_1$, $Q_2$) corresponding to the sign of the measuring signals (S1, S2) of the sensors (1, 2).

**4.** An apparatus according to claim 3, characterized in that the evaluating circuit has an indicating instrument for the positive sense of direction of the machine and an indicating element for the negative sense of its rotation respectively.

**5.** An apparatus according to claims 3 or 4, characterized in that the indicating instruments are lights, more particularly light-emitting diodes (11, 12).

**6.** An apparatus according to one of claims 3 to 5, characterized in that the evaluating circuit has preamplifiers (3, 4) for amplifying the sensor signals, band-pass filters (5, 6) for filtering out undesirable interference frequencies, analog-to-digital transformer circuits (7, 8), more particularly Schmitt triggers for the conversion of the analog signals to digital signals, and comparators (9, 10) for determining the sign of the phase displacement.

**7.** An apparatus according to one of claims 3 to 6, characterized in that the evaluating circuit is microprocessor-controlled.

8. An apparatus according to one of claims 3 to 7, characterized in that the apparatus forms part of an apparatus for the monitoring of all the operational parameters of a machine, more particularly an electric motor for a pump or a fan.

9. An apparatus according to one of claims 3 to 8, characterized in that the apparatus is portable and supplied by an accumulator.

10. An apparatus according to one of claims 3 to 9, characterized in that the apparatus has a digital interface (16) for the connection of a control device.

**Revendications**

1. Procédé pour le contrôle sans contact du sens de rotation du rotor d'une machine électrique qui est entourée par un carter de machine, caractérisé en ce qu'on détecte l'écoulement du champ de fuite magnétique engendré par la machine, par des capteurs (1, 2) disposés sur la face extérieure du carter de machine dans la zone du dispositif de couplage électromagnétique et/ou magnétique entre stator et rotor, décalés radialement, par rapport à l'axe (M) de machine, d'une valeur d'angle, capteurs dont les signaux de mesure (S1, S2) décalés en phase et égaux entre eux, sont amenés à un circuit d'évaluation qui émet, en tant qu'indication du sens de rotation de la machine, un signal de sortie (Q1, Q2) correspondant au sens du décalage de phase.

2. Procédé selon la revendication 1, caractérisé en ce que l'écoulement du champ de fuite magnétique engendré par la machine est détecté par deux capteurs (1, 2).

3. Dispositif pour la mise en oeuvre du procédé selon l'une des revendication 1 et 2, caractérisé en ce que les capteurs (1, 2) pour détecter l'écoulement du champ de fuite magnétique engendré par la machine sont des capteurs électromagnétiquement sensibles (1, 2), en particulier des capteurs à effet Hall, qui peuvent être fixés à une valeur d'angle ($\beta_M$) au carter de machine sur sa face extérieure dans la zone du dispositif de couplage électromagnétique et/ou magnétique entre stator et rotor et sont reliés à un circuit d'évaluation qui émet, en tant qu'indication du sens de rotation de la machine, un signal de sortie (Q1, Q2) correspondant au sens des signaux de mesure (S1, S2) des capteurs (1, 2).

4. Dispositif selon la revendication 3, caractérisé en ce que le circuit d'évaluation présente respectivement un instrument d'affichage pour le sens de rotation positif de la machine et un élément d'affichage pour le sens négatif.

5. Dispositif selon la revendication 3 ou 4, caractérisé en ce que les instruments d'affichage sont des lampes, en particulier des diodes lumineuses (11, 12).

6. Dispositif selon l'une des revendications 3 à 5, caractérisé en ce que le circuit d'évaluation présente des préamplificateurs (3, 4) pour l'amplification des signaux des capteurs, des passe-bandes (5, 6) pour l'extraction par filtration de fréquences perturbatrices non souhaitées, des circuits convertisseurs analogique-numérique (7, 8), en particulier des bascules de Schmitt, pour la conversion des signaux analogiques en numériques et des comparateurs (9, 10) pour déterminer le sens du décalage de phase.

7. Dispositif selon l'une des revendications 3 à 6, caractérisé en ce que le circuit d'évaluation est commandé par microprocesseur.

8. Dispositif selon l'une des revendications 3 à 7, caractérisé en ce que le dispositif est une partie d'un dispositif pour la surveillance de tous les paramètres d'exploitation d'une machine, en particulier d'un moteur électrique pour une pompe ou un ventilateur.

9. Dispositif selon l'une des revendications 3 à 8, caractérisé en ce que le dispositif est portable et est alimenté par un accumulateur.

10. Dispositif selon l'une des revendications 3 à 9, caractérisé en ce que le dispositif présente une interface numérique (16) pour le raccordement d'un appareil de réglage.

Fig.1

EP 0 510 336 B1

Fig. 2

Fig. 3